# EUROPEAN PATENT APPLICATION

(11) **EP 3 561 003 A1**
(43) Date of publication of application: **30.10.2019**
(21) Application number: 18168720.3
(22) Date of filing: 23.04.2018
(51) Int. Cl.: C09C 1/36, C09C 1/02, C09C 1/04, C09C 1/30, C09C 3/08

(54) **A HYBRID PIGMENT, METHOD FOR PREPARATION THEREOF AND USES THEREOF**

(71) Applicant: Clariant Plastics & Coatings Ltd, 4132 Muttenz (CH)
(72) Inventor: The designation of the inventor has not yet been filed
(74) Representative: Jacobi, Carola

(57) **Abstract**

The present invention relates to a hybrid pigment with high opacity comprising organic-inorganic pigment and uses thereof. The present invention also relates to a process for synthesizing the hybrid pigment and using said pigment in varnishes, paints, inks, plastics and coating materials.

## Description

### FIELD OF INVENTION

The present invention relates to a hybrid pigment with high opacity comprising organic-inorganic pigment and uses thereof. The present invention also relates to a process for synthesizing the hybrid pigment and using said pigment in varnishes, paints, printing, inks, plastics and coating materials.

### BACKGROUND OF INVENTION

Inorganic lead chrome pigments are known for its application in paint industry for its opacity and fastness properties. The challenges with the inorganic pigment are its inherent toxicity and hazard nature. Strenuous efforts are going around globally replacing the toxic inorganic pigments for example for coating application. Most current available solution is dry blending of organic pigment with inorganic pigment (non-toxic). Such blends suffer from separation, which creates stability problems and whitening of organic pigments.

Various techniques have been utilized in an attempt to diminish the optical crowding effect and address the other problems noted above. For example, fillers and extenders such as clay, calcium carbonate, alumina and silica have been added to paint base products to get the desired property. Also, pigment particles have been coated with certain inorganic compounds that function to modify the surface properties of the particles in a manner that discourages agglomeration of the particles.

CN-1103418 discloses preparation of yellow pigment, particularly Zn-Ti yellow pigment to solve the problem of poor coloring of mixed-pigment composite pigments. In this patent new inorganic matrix as the coating core of the sun-resistant zinc titanium yellow series pigment is synthesized. The process for synthesizing a fast-drying zinc-titanium yellow pigment comprises coating of monoazo yellow organic pigment on the inorganic matrix having components of X.ZnS, YBaSO₄, and ZM5 through a diazo coupling reaction to form a light-resisting composition.

JP-H11172134 discloses a process for producing the organic pigment comprising including a metallic compound dissolved or colloidally dispersed in an aqueous solution into at least one component of a diazo component or a tetrazo component and a coupler component and mixing and dissolving a pigment-dispersing agent into the coupler component and reacting the diazo component or the tetrazo component with the coupler component to synthesize the organic pigment. For improving the dispersibility specific pigment dispersing agent are used, for example, styrene based copolymers namely styrene - acrylic acid copolymer, styrene - methyl styrene - acrylate copolymer, styrene - acrylic acid - lower alkyl ester of about acrylic acid ester (C1 -C4, forth) copolymer, styrene - methacrylic acid copolymer and so on.

CN-1073463 discloses a method of making an organic binder-containing pigment comprising mixing of diazo component solution to the coupling component solution containing the inorganic extender pigment viz., ultrafine talc, subjected to the coupling reaction to obtain the organic-inorganic nucleating pigment.

CN-104629491 provides a method for synergistically modifying pigment red 170 by fumed micro-silica and Triton X-100. In the process of preparing pigment red 170 through coupling reaction, fumed micro-silica and non-ionic surfactant Triton X-100 are introduced and when the coupling component is added. The adhesion between inorganic and organic components is enhanced by Triton X-100.

There exists a need for non-toxic pigments with improved opacity and higher strength for making films, paints, sheets, and containers.

The present invention provides a hybrid pigment comprising organic and inorganic pigment with superior opacity and light fastness and also provides a method of preparing the hybrid pigment.

### SUMMARY OF INVENTION

In an aspect the present invention provides a hybrid pigment comprising organic and inorganic pigment.

In another aspect the present invention provides a method of preparing the hybrid pigment.

In yet another aspect the present invention provides use of hybrid pigment in the plastic, paints, ink industry, varnishes, printing inks and coating materials.

In another aspect there is provided a composition comprising a hybrid pigment of the present invention.

In another aspect the present invention provides a paint composition comprising a paint and hybrid pigment of the present invention.

In another aspect the present invention provides an ink composition comprising an ink and hybrid pigment of the present invention.

In another aspect the present invention provides a plastic composition comprising a plastic material and hybrid pigment of the present invention.

### BRIEF DESCRIPTION OF THE DRAWINGS

The foregoing summary, as well as the following detailed description of the invention will be better understood when read in conjunction with the appended drawings. For the purpose of assisting in the explanation of the invention, there are shown in the drawings embodiments which are presently preferred and considered illustrative. It should be understood, however, that the invention is not limited to the precise arrangements and instrumentation shown therein.

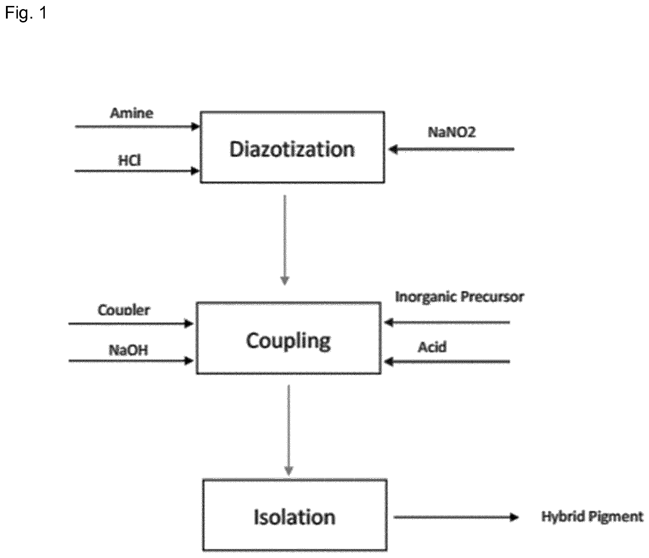

Fig. 1: This figure represents method of preparing hybrid pigment in accordance with present invention.

### DETAILED DESCRIPTION OF INVENTION

For the purposes of the following detailed description, it is to be understood that the invention may assume various alternative variations and step sequences, except where expressly specified to the contrary. Moreover, other than in any operating examples, or where otherwise indicated, all numbers expressing, for example, quantities of ingredients used in the specification are to be understood as being modified in all instances by the term "about". It is noted that, unless otherwise stated, all percentages given in this specification and appended claims refer to percentages by weight of the total composition.

Thus, before describing the present invention in detail, it is to be understood that this invention is not limited to particularly exemplified process parameters that may of course, vary. It is also to be understood that the terminology used herein is for the purpose of describing particular embodiments of the invention only, and is not intended to limit the scope of the invention in any manner.

The use of examples anywhere in this specification including examples of any terms discussed herein is illustrative only, and in no way limits the scope and meaning of the invention or of any exemplified term. Likewise, the invention is not limited to various embodiments given in this specification.

Unless otherwise defined, all technical and scientific terms used herein have the same meaning as commonly understood by one of ordinary skill in the art to which this invention pertains.

It must be noted that, as used in this specification and the appended claims, the singular forms "a," "an" and "the" include plural referents unless the content clearly dictates otherwise.

The terms "preferred" and "preferably" refer to embodiments of the invention that may afford certain benefits, under certain circumstances. However, other embodiments may also be preferred, under the same or other circumstances.

Furthermore, the recitation of one or more preferred embodiments does not imply that other embodiments are not useful, and is not intended to exclude other embodiments from the scope of the invention.

As used herein, the terms "comprising" "including," "having," "containing," "involving," and the like are to be understood to be open-ended, i.e., to mean including but not limited to.

According to an aspect of the present invention there is provided a hybrid pigment comprising organic pigment and inorganic pigment.

In preferred embodiment suitable organic pigment includes, but not limited to, monoazo and diazo pigments selected from the group consisting of Pigment Yellow 65, 73, 74, 83, 155, 180, 181, 183,191 and 194 and Pigment Orange 13, 16, 34 and 36.

In an embodiment suitable inorganic pigment includes but not limited titanium dioxide (TiO₂), Calcium carbonate (CaCO₃), Zinc Sulfate (ZnSO₄), Zinc oxide (ZnO), barium sulfate (BaSO₄) and mixture thereof.

In an embodiment of the hybrid pigment has inorganic pigment content in the range of 10 % by weight to 50 % by weight to total weight of the hybrid pigment.

In certain embodiments, the inorganic pigment content is in a range of 10 % by weight to 30 % by weight. In another embodiment, the inorganic pigment content is in a range of 30 % by weight to 50 % by weight.

In an embodiment, a method of preparing hybrid pigment is provided. The method comprises azo coupling of one or more diazonium components and one or more coupling components in presence of an inorganic pigment wherein said inorganic pigment is generated in-situ from an inorganic pigment precursor.

The method of preparing hybrid pigment in accordance with present invention is represented in figure 1.

In another aspect, the present invention provides a method of preparing the hybrid pigment.

In an embodiment, the method of preparing the hybrid pigment comprises the following steps.
Step 1): Preparing a diazonium solution comprising at least one diazonium component formed from one or more amines
Step 2): Preparing a coupler solution comprising one or more coupler and at least one inorganic pigment generated in-situ from an inorganic pigment precursor to form a coupler component
Step 3): Preparing hybrid pigment by azo coupling of diazonium component and coupler component
Step 4): Isolation of the hybrid pigment

The examples of amine used is selected from the group consisting of para chloro ortho nitro aniline, para nitro o-anisidine, Para chloro ortho Nitro aniline, 4-Chloroanthranilic acid, 2-amino 5-nitro anisole, 2,5-dichloroaniline, 2,4-dinitroaniline, 2-nitro-4-methylaniline, 3,3'-dichlorobenzidine, 3,3'-dimethoxybenzidine, 3-amino-4-chlorobenzamide, 2-amino-5-chloro-4-ethylbenzene sulfonic acid, 4-chloro-6-amino-m-toluene sulfonic acid,2-amino-1-naphthalene sulfonic acid, 3-chloro-6-amino-4-methylbenzene-sulfonic acid, 2-amino-5-methylbenzene sulfonic acid, 2-methoxy-5-nitro-aniline, 5-aminoisophthalic acid dimethyl ester, 2-aminobenzoic acid, 2-trifluoromethylaniline,3-amino-4-methoxybenzanilide or mixtures thereof.

In a typical diazonium component preparation, one or more amine undergoes diazotization in presence of alkali metal nitrites or lower alkyl nitrites together with an adequately strong acid such as a mineral acid to form the diazonium component. The diazotization reaction can be conducted at a temperature in the range from about - 20 °C to about 30 °C, preferably from about 0 °C to about 20 °C.

In step 2, a coupler solution is prepared. The coupler solution comprises one or more coupler and at least one inorganic pigment generated in-situ to form a coupler component.

Example of coupler are selected from the group consisting of acetoacetyl anisidine, acetoacetylated-2-methoxyanilide, 3-methyl-1-p-tolyl-5-pyrazolone, 1- phenyl-3-methyl-5-pyrazolone, Barbituric acid, H acid, F acid, Schaffers acid, Phenyl tetra methyl pyrazolone, Acetoacetylamino-benzene, 2-acetoacetylamino-toluene, 4-acetoacetylamino-toluene, 2-acetoacetylamino-anisol, 4-acetoacetylamino-anisol, 2-acetoacetylamino-phenetitide, 4-acetoacetylaminophenetitide, 1-acetoacetylamino-2,4-dimethylbenzene, 1-acetoacetylamino-2,4-dimethoxybenzene, 1-acetoacetylamino-2,5-dimethoxybenzene, 1-acetoacetylamino-2,4-dichlorobenzene, 1-acetoacetylamino-2,5-dimethoxy-4-chlorobenzene, 5-chloro-2-acetoacetylamino-toluene, 3-chloro-4-acetoacetylamino-toluene, 1-acetoacetylamino-naphthalene, 2-acetoacetylamino-naphthalene, 2-naphthol, 2-hydroxy-3-naphthoic acid, 3-hydroxy-2-naphthanilide, 6-bromo-2-hydroxy-3-naphthoic acid, 2-naphthol-5-sulfonic acid, 4'-acetamido-3-hydroxy-2-napthanilide, 3-hydroxy-3'-nitro-2-naphthanilide, 2'-ethoxy-3-hydroxy-2-naphthanilide, 2-naphthol-3,7-disulfonic acid, 2'methoxy-3-hydroxy-2-napthanilide, 3'-nitro-3-hydroxy-2-naphthanilide, 3-hydroxy-2-naphtho-o-toluidide, 2'-methyl-5-chloro-3-hydroxy-2-naphthanilide, 2'-methyl-3-hydroxy-2-naphthanilide, 1-naphthol-3,7-disulfonic acid, 3-hydroxy-N-2-naphthyl-2-naphthamide, 4'-chloro-3-hydroxy-2-naphthanilide, When A is derived from a pyrazolone, 3-methyl-1-phenyl-pyrazolone-(5),3-methyl-1-(3'-sulfophenyl)-pyrazolone-(5), 3-methyl-1-(4'-sulfophenyl)-pyrazolone-(5), 3-carbethoxy-1-phenyl-pyrazoline-(5). 3-methyl-1-(4'-carboxyphenyl)-pyrazolone-(5), 3-methyl-1-(2'-chloro-4'-sulfophenyl)-pyrazolone-(5), 3-methyl-1-(2',5'-dichloro-4'-sulfophenyl)-pyrazolone(5), 3-methyl-1-(6'-chloro-2'-methyl-4'-sulfophenyl)pyrazolone-(5), 1-phenyl-3-carboxy-pyrazolone-(5), 1-(4'-sulfophenyl)-3-carboxy-pyrazolone-(5), 3-methyl-1-p-tolyl-pyrazolone-(5) or mixtures thereof.

In an embodiment, inorganic pigment precursors include, but not limited to, oxides, oxychlorides, alkoxides, hydroxides, sulphates, nitrates, of metals titanium (Ti), Silicon (Si), calcium (Ca), barium (Ba), Zinc (Zn) or any combinations thereof.

In an embodiment, inorganic pigment precursor is selected from oxychloride of titanium or alkoxide of titanium.

In one embodiment, inorganic pigment precursor is titanium oxychloride or titanium isopropoxide.

In one embodiment, inorganic pigment precursor is titanium oxychloride.

Inorganic pigment precursors used in the present invention are selected from below

**Table 1**

| Name | Reagent |
|---|---|
| Pigment Precursor A | Titanium oxychloride |
| Pigment Precursor B | Calcium hydroxide + carbon dioxide |
| Pigment Precursor C | Zinc sulphate + ammonium bicarbonate |
| Pigment Precursor D | Barium nitrate + ammonium sulphate |

The pigment precursors used in the present invention provides advantageously better dispersibility or solubility than the inorganic pigment itself.

In an embodiment, preparing the coupler solution comprises addition of inorganic pigment precursor to one or more coupler and treating with a suitable base. Example of such base includes sodium hydroxide, potassium hydroxide or any combinations thereof. In the present invention inorganic pigment is generated in-situ during the preparation of coupler component.

In an embodiment, preparation of coupler solution further includes subjecting the coupler solution to acid treatment to form the coupler component at step 2. The acid treatment of the coupler solution during in-situ generation of inorganic pigment advantageously helps in coating, completely or at least part of the in-situ generated inorganic pigment with the coupler. The coupling component thus formed serves as a template for preferential formation of the organic pigment over the inorganic pigment through azo coupling, at step 3.

In an embodiment, the coupler solution may additionally include wetting agents, binder and/or oil. Example wetting agents, binder and/or oil includes polyvinyl pyrrolidone, Castor oil, Rosin D, Dadamol X, Genapol T-250, Genapol T-200, Tetramethyl-5-decyne-4,7-diol and Neuosperse series.

In an embodiment the coupler solution is subjected to acid treatment prior to azo coupling.

The examples of acid is selected from organic and inorganic acids selected from formic acid, nitric acid, hydrochloric acid, sulphuric acid, acetic acid, oxalic acid, phosphoric acid or mixtures thereof.

In step 3, the hybrid pigment is prepared by azo coupling of diazonium component and coupler component. A typical azo coupling reaction is performed by adding the diazonium component to a coupler to form the azo pigment. Alternatively, the coupler can be added to the diazonium component. The coupling reaction is carried out at a low temperature of from about -20 °C to about 80 °C, preferably from about 0 °C to about 40 °C.

In an embodiment the preparation of the hybrid pigment further comprises isolation of hybrid pigment.

In one embodiment, the hybrid pigment is isolated by treating with water and/or an organic solvent, at temperatures for example of from 20 °C to 250 °C. For this purpose, for example, it is possible to heat the moist or dried pigments in water or in organic solvents, such as pyridine, N-methyl-2-pyrrolidone, dimethylformamide, dimethylacetamide, dimethyl sulfoxide, alcohols, chlorobenzenes, glacial acetic acid, methyl isobutylketone, isobutanol, propionitrile, ethanol, methanol, dimethyl carbonate, diethyl carbonate, quinoline or glycols, for example, or in a mixture of these solvents, for a certain time, where appropriate under increased pressure and where appropriate with addition of nonionic or ionic surfactants.

Typically drying may be carried out by employing known drying equipments, such as drying ovens, bucket-wheel dryers, tumble dryers, contact dryers, and, in particular, spin flash dryers and spray dryers. Through the choice of an appropriate drying apparatus it is also possible to produce low-dust and free-flowing powders or granules of the pigment.

In an embodiment the hybrid pigment of the present invention can be used as an alternative to toxic inorganic pigment.

In another embodiment of the present invention the hybrid pigment is readily dispersible with stable dispersion.

The present invention aim to obtain a pigment composition which can achieve one or more of the following effects:
1. High hiding power
2. High strength
3. No whitening effect
4. Reduced degradation
5. Better heat stability
6. No separation of organic pigment with inorganic pigment or vice versa.

In an embodiment, the hybrid pigment can be used as such in paints, printing inks, inks for writing instruments, plastics for making domestic items like toys, kitchen container and the like.

In an embodiment, the hybrid pigment can be used in specialty chemicals for example in soaps, detergents and the like.

In another embodiment the hybrid pigment when used in coating and plastic can eliminate exposure to toxic inorganic pigment.

In an aspect the present invention provides a composition comprising hybrid pigment of the present invention.

In another embodiment the present invention provide use of hybrid pigment comprising organic and inorganic pigment for paints, inks and plastics.

In one embodiment the present invention provide a paint composition comprising a paint and hybrid pigment of the present invention.

In another embodiment the present invention provide an ink composition comprising an ink and hybrid pigment of the present invention.

In another embodiment the present invention provide a plastic composition comprising a plastic material and hybrid pigment of the present invention.

Embodiments of the present invention provide composition that may further comprise, shading colorants, and auxiliaries such as, for example, surfactants, pigmentary and non-pigmentary dispersants, fillers, standardizers, resins, waxes, defoamers, antidust agents, extenders, antistatic agents, preservatives, drying retardants, rheology control additives, wetting agents, antioxidants, UV absorbers, light stabilizers, or any combinations thereof.

In one embodiment, the composition is a coatings formulation. Example such coatings formulation include decorative coatings or industrial coatings.

The pigment composition of the present invention is particularly advantageous in the paint and varnish, paper, plastics, printing inks, and building materials industries. Advantages are recognized in the fact that the pigment composition has high gloss and colour purity and that it shows good dispersing features in both solvent-containing and aqueous systems, as well as in plastics.

The following examples are provided to better illustrate the present invention and are not to be interpreted in any way as limiting the scope of the invention. All specific compositions, materials, and methods described below, in whole or in part, fall within the scope of the invention. These specific compositions, materials, and methods are not intended to limit the invention, but merely to illustrate specific embodiments falling within the scope of the invention. One skilled in the art may develop equivalent compositions, materials, and methods without the exercise of inventive capacity and without departing from the scope of the invention. It will be understood that many variations can be made in the procedures herein described while still remaining within the bounds of the invention. It is the intention of the inventors that such variations are included within the scope of the invention.

### EXAMPLES

### Example 1

### Preparation of hybrid pigment:

### Step 1: Preparation of diazo component

In 2 liter glass jacketed reactor water (360 ml), Fast red B base (170 gram (g)) and 30 % hydrochloric acid (HCI) (260 g) were charged and the mixture was stirred for 30 minutes. 30 % solution of sodium nitrite (NaNO₂) (253 g) was slowly added to the above pigment solution with stirring maintaining the temperature of the mixture at 0 - 5 °C and continued stirring the mixture for 30 - 60 minutes at the same temperature. After completion of diazotization the mixture was neutralized by adding 10 % solution of sulfamic acid. Carbon (1 g) was added to the diazotized mixture, stirred the mass for 5 - 10 minutes and filtered to obtain light yellow color solution.

### Step 2: Preparation of coupler component

In 5 liter glass jacketed reactor, water (3100 ml) and acetoacetyl anisidine (AAOA) (222.0 g) was charged and the reaction mixture was cooled to 10 - 15 °C. 40 % NaOH solution (180 g) was added to the above solution and stirred the mixture continuously for 10 - 15 minutes to get the clear solution. Pigment precursor A as defined in table 1 in above description (100 g) was added to the mixture followed by the addition of acetic acid to maintain pH between 4 to 7 maintaining the temperature of reaction mixture at 10 - 15 °C to obtain coupler solution.

### Step 3: Preparation of hybrid pigment

The diazo solution prepared in step 1 is slowly added to the coupler solution of step 2 during the period of 1 hour while maintaining pH between 4 to 6 using 10 % NaOH solution. The mixture was stirred for 1 - 2 hour.
After the completion of reaction, the mixture was heated to about 90 - 95 °C for 1 - 5 hours. The mixture was then cooled to about 70 - 75 °C and filtered to obtain the wet cake. The wet cake thus obtained was dried in an oven at 60 °C for 24 - 30 hours to obtain dried 444 g of pigment. Yield: 95 - 98 %.

### Example 2

Diazo preparation: 360 g of water, 170 g of Para nitro o-anisidine, 260 g of concentrated HCI and 253 g of sodium nitrite used.
Coupler solution: 3100 g of water, 222 g of Acetoacetyl anisidine, 180 g of NaOH, 66 g of Pigment precursor A were added.
Pigment preparation: The pigment is prepared by following the step 3 as provided in example 1.

### Example 3

Diazo preparation: 360 g of water, 170 g of Para nitro o-anisidine, 260 g of concentrated HCI and 253 g of sodium nitrite used.
Coupler solution: 3100 g water, 222 g of Acetoacetyl anisidine, 180 g of NaOH, 100 g of Pigment precursor A were added.
Pigment preparation: The pigment is prepared by following the step 3 as provided in example 1

### Example 4

Diazo preparation: 360 g of water, 170 g of Para nitro o-anisidine, 260 g of concentrated HCI and 253 g of sodium nitrite used.
Coupler solution: 3100 g water, 222 g of Acetoacetyl anisidine, 180 g of NaOH, 131 g of Pigment precursor A were added.
Pigment preparation: The pigment is prepared by following the step 3 as provided in example 1.

### Example 5

Diazo preparation: 360 g of water, 170 g of Para nitro o-anisidine, 260 g of concentrated HCI and 253 g of sodium nitrite used.
Coupler solution: 3100 g water, 222 g of Acetoacetyl anisidine, 180 g of NaOH, 196 g of Pigment precursor A were added.
Pigment preparation: The pigment is prepared by following step 3 as provided in example 1.

### Example 6

Diazo preparation: 360 g of water, 170 g of Para nitro o-anisidine, 260 g of concentrated HCI and 253 g of sodium nitrite used.
Coupler solution: 3100 g water, 222 g of Acetoacetyl anisidine, 180 g of NaOH, 43 g of Pigment precursor B were added.
Pigment preparation: The pigment is prepared by following the step 3 as provided in example 1.

### Example 7

Diazo preparation: 360 g of water, 170 g of Para nitro o-anisidine, 260 g of concentrated HCI and 253 g of sodium nitrite used.
Coupler preparation: 3100 g of water, 210 g of Acetoacetyl anisidine, 11 g of 1-phenyl-3-methyl-5-pyrazolone, 180 g of NaOH, 66 g of Pigment precursor A were added.
Pigment preparation: The pigment is prepared by following the step 3 as provided in example 1.

### Example 8

Diazo preparation: 360 g of water, 170 g of Para nitro o-anisidine, 260 g of concentrated HCI and 253 g of sodium nitrite used.
Coupler preparation: 3100 g of water, 210 g of Acetoacetyl anisidine, 10.5 g of Para 3-methyl-1-p-tolyl-5-pyrazolone, 1.5 g of NaOH, 66 g of Pigment precursor A were added.
Pigment preparation: The pigment is prepared by following the step 3 as provided in example 1.

### Example 9

Diazo preparation: 360 g of water, 170 g of Para nitro o-anisidine, 260 g of concentrated HCI and 253 g of sodium nitrite used.
Coupler preparation: 3100 g of water, 210 g of Acetoacetyl anisidine, 11 g of 1-phenyl-3-methyl-5-pyrazolone, 180 g of NaOH, 29 g of Pigment precursor B were added.
Pigment preparation: The pigment is prepared by following the step 3 as provided in example 1.

### Example 10

Diazo preparation: 180 g of water, 130 g of Para nitro o-anisidine, 126 g of concentrated HCI and 125 g of sodium nitrite used.
Coupler preparation: 1550 g of water, 105 g of Acetoacetyl anisidine, 5.25 g of Para 3-methyl-1-p-tolyl-5-pyrazolone, 90 g of NaOH, 15 g of Pigment precursor B were added.
Pigment preparation: The pigment is prepared by following the step 3 as provided in example 1.

### Example 11

Diazo preparation: 378 g of water, 169 g of Para nitro o-anisidine, 9 g of Para chloro ortho Nitro aniline 275 g of concentrated HCI and 266 g of sodium nitrite used.
Coupler preparation: 3160 g of water, 221 g of Acetoacetyl anisidine, 11 g of 1-phenyl-3-methyl-5-pyrazolone, 190 g of NaOH, 66 g of Pigment precursor A were added.
Pigment preparation: The pigment is prepared by following the step 3 as provided in example 1.

### Example 12

Diazo preparation: 378 g of water, 169 g of Para nitro o-anisidine, 9 g of Para chloro ortho Nitro aniline, 275 g of concentrated HCI and 266 g of sodium nitrite used.
Coupler preparation: 3160 g of water, 221 g of Acetoacetyl anisidine, 11 g of 1-phenyl-3-methyl-5-pyrazolone, 190 g of NaOH, 66 g of Pigment precursor B were added.
Pigment preparation: The pigment is prepared by following the step 3 as provided in example 1.

### Example 13

Diazo preparation: 378 g of water, 169 g of Para nitro o-anisidine, 9 g of Para chloro ortho Nitro aniline, 275 g of concentrated HCI and 266 g of sodium nitrite used.
Coupler preparation: 3160 g of water, 233 g of Acetoacetyl anisidine, 190 g of NaOH, 66 g of Pigment precursor A were added.
Pigment preparation: The pigment is prepared by following the step 3 as provided in example 1.

### Example 14

Diazo preparation: 378 g of water, 169 g of Para nitro o-anisidine, 9 g of Para chloro ortho Nitro aniline, 275 g of concentrated HCI and 266 g of sodium nitrite used.
Coupler preparation: 3160 g of water, 233 g of Acetoacetyl anisidine, 190 g of NaOH, 66 g of Pigment precursor B were added.
Pigment preparation: The pigment is prepared by following the step 3 as provided in example 1.

### Example 15

### Application testing of hybrid pigment

### 1. Paint study:

In 100 ml container 4.3 g Pigment was placed followed by 15.0 g binder, 1 g dispersing agent, 60 g glass beads, mixed it for 30 minutes. To this added 48 g binder, 3 g drier continue thorough mixing for 5 minutes. Filtered through filter cloth and pigment paste was compared with lead chromate pigments (standard) by draw down method. After drying the drawdown for 24 hours, the results are taken and are as follows

| Example No. | Visual report | Contrast ratio |
|---|---|---|
| Example-1 | 5 OP | +19 |
| Example-2 | 5 OP | +20 |
| Example-3 | 5 OP | +19 |
| Example-4 | 5 OP | +19 |

Contrast ratio (Opacity) results indicate that opacity of inventive samples are higher than the standard (Lead chromate inorganic pigment).

| Trial No. | Grey Scale rating (After 500 hrs) | Grey Scale rating (After 1000 hrs) |
|---|---|---|
| Lead Chromate | 3 | 2 - 3 |
| Example-1 | 4 | 3 - 4 |
| Example-2 | 3 - 4 | 3 |
| Example-3 | 4 - 5 | 4 |
| Example-4 | 3 - 4 | 3 - 4 |

Ultraviolet irradiation of discoloration was evaluated using blue scale 1 - 8 grade. It was found that the inventive hybrid pigments gave better fastness and less discoloration compare to toxic Lead Chromate inorganic pigment.

### 2. Plastic application study

### PVC:

100 g PVC/polyethylene/engineering thermo plastics powder and 0.1 g pigment powder of present invention were mixed for 5 - 10 minutes. After proper mixing take sheet on twin roll mill @130 & 160 deg. C for 7 & 6 minutes respectively at 20 - 30 mm thickness. The resulting plastic sheet showed better opacity when compared to standard inorganic lead chromate pigments.

### 3. Ink application study:

In 250 ml container 25 g pigment of present invention was added followed by 25.0 g binder, 1 g dispersing agent, 60 g, glass beads, grind it for 60 mins. To this added 75 g binder, 6 g drier mixed thoroughly for 5 minutes. The mixture was filtered through filter cloth and drawdown in the paper and showed better opacity when compared to inorganic lead chromate pigments.

## Claims

1. A method of preparing hybrid pigment comprising azo coupling of one or more diazonium components and one or more coupling components in presence of an inorganic pigment wherein said inorganic pigment is generated in-situ from an inorganic pigment precursor.

2. The method as claimed in claim 1, wherein said diazonium component is prepared from one or more amines selected from para chloro ortho nitro aniline, para nitro o-anisidine, Para chloro ortho Nitro aniline, 4-Chloroanthranilic acid, 2-amino 5-nitro anisole, 2,5-dichloroaniline, 2,4-dinitroaniline, 2-nitro-4-methylaniline, 3,3'-dichlorobenzidine, 3,3'-dimethoxybenzidine, 3-amino-4-chlorobenzamide, 2-amino-5-chloro-4-ethylbenzene sulfonic acid, 4-chloro-6-amino-m-toluene sulfonic acid,2-amino-1-naphthalene sulfonic acid, 3-chloro-6-amino-4-methylbenzenesulfonic acid, 2-amino-5-methylbenzene sulfonic acid, 2-methoxy-5-nitro-aniline, 5-aminoisophthalic acid dimethyl ester, 2-aminobenzoic acid, 2-trifluoromethylaniline,3-amino-4-methoxybenzanilide or mixtures thereof.

3. The method as claimed in claim 1 wherein said coupling component comprises one or more coupler selected from acetoacetyl anisidine, acetoacetylated-2-methoxyanilide, 3-methyl-1-p-tolyl-5-pyrazolone, 1- phenyl-3-methyl-5-pyrazolone, Barbituric acid, H acid, F acid, Schaffer's acid, Phenyl tetra methyl pyrazolone, Acetoacetylamino-benzene, 2-acetoacetylamino-toluene, 4-acetoacetylamino-toluene, 2-acetoacetylamino-anisol, 4-acetoacetylamino-anisol, 2-acetoacetylamino-phenetitide, 4-acetoacetylaminophenetitide, 1-acetoacetylamino-2,4-dimethylbenzene, 1-acetoacetylamino-2,4-dimethoxybenzene, 1-acetoacetylamino-2,5-dimethoxybenzene, 1-acetoacetylamino-2,4-dichlorobenzene, 1-acetoacetylamino-2,5-dimethoxy-4-chlorobenzene, 5-chloro-2-acetoacetylamino-toluene, 3-chloro-4-acetoacetylamino-toluene, 3-methyl-1-phenyl-pyrazolone-(5),3-methyl-1-(3'-sulfophenyl)-pyrazolone-(5), 3-methyl-1-(4'-sulfophenyl)-pyrazolone-(5), 3-carbethoxy-1-phenyl-pyrazoline-(5). 3-methyl-1-(4'-carboxyphenyl)-pyrazolone-(5), 3-methyl-1-(2'-chloro-4'-sulfophenyl)-pyrazolone-(5), 3-methyl-1-(2',5'-dichloro-4'-sulfophenyl)-pyrazolone(5), 3-methyl-1-(6'-chloro-2'-methyl-4'-sulfophenyl)pyrazolone-(5), 1-phenyl-3-carboxy-pyrazolone-(5), 1-(4'-sulfophenyl)-3-carboxy-pyrazolone-(5), 3-methyl-1-p-tolyl-pyrazolone-(5) 1-acetoacetylamino-naphthalene, 2-acetoacetylamino-naphthalene, 2-naphthol, 2-hydroxy-3-naphthoic acid, 3-hydroxy-2-naphthanilide, 6-bromo-2-hydroxy-3-naphthoic acid, 2-naphthol-5-sulfonic acid, 4'-acetamido-3-hydroxy-2-napthanilide, 3-hydroxy-3'-nitro-2-naphthanilide, 2'-ethoxy-3-hydroxy-2-naphthanilide, 2-naphthol-3,7-disulfonic acid, 2'methoxy-3-hydroxy-2-napthanilide, 3'-nitro-3-hydroxy-2-naphthanilide, 3-hydroxy-2-naphtho-o-toluidide, 2'-methyl-5-chloro-3-hydroxy-2-naphthanilide, 2'-methyl-3-hydroxy-2-naphthanilide, 1-naphthol-3,7-disulfonic acid, 3-hydroxy-N-2-naphthyl-2-naphthamide, 4'-chloro-3-hydroxy-2-naphthanilide, or mixtures thereof.

4. The method as claimed in claim 1 wherein said inorganic pigment precursor is selected from oxides, oxychlorides, alkoxides, hydroxides, sulphates, nitrates of metals selected from titanium (Ti), Silicon (Si), calcium (Ca), barium (Ba), Zinc (Zn) or mixtures thereof.

5. The method as claimed in claim 4 wherein said inorganic pigment precursor is selected from oxychloride of titanium or alkoxide of titanium.

6. The method as claimed in claim 1, wherein the hybrid pigment has inorganic pigment content in the range of 10 % by weight to 50 % by weight of total weight of the hybrid pigment.

7. A method of preparation of hybrid pigment comprises
1) Preparing a diazonium solution comprising at least one diazonium component formed from one or more amine;
2) Preparing a coupler solution comprising one or more coupler and at least one inorganic pigment generated in-situ from an inorganic pigment precursor to form coupler component;
3) Preparing hybrid pigment by azo coupling of diazonium component and coupler component; and
4) Isolation of the hybrid pigment.

8. The method as claimed in claim 7, wherein preparing the coupler solution further comprises subjecting the inorganic pigment to acid treatment prior to azo coupling.

9. The method as claimed in claim 8 wherein said acid is selected from organic and inorganic acids selected from formic acid, nitric acid, hydrochloric acid, sulphuric acid, acetic acid, oxalic acid, phosphoric acid or mixtures thereof.

10. A hybrid pigment prepared from the method as claimed in claim 1 or claim 7.

11. A composition comprising the hybrid pigment as claimed in claim 10.

12. A paint composition comprising paint and the hybrid pigment as claimed in claim 11.

13. An ink composition comprising an ink and the hybrid pigment as claimed in claim 11.

14. A plastic composition comprising a plastic material and the hybrid pigment as claimed in claim 11.

15. Use of hybrid pigment as claimed in claim 11 for paints, inks, printing and plastics.
